# EUROPEAN PATENT APPLICATION

(11) **EP 2 184 632 A2**
(43) Date of publication of application: **12.05.2010**
(21) Application number: 09275106.4
(22) Date of filing: 09.11.2009
(51) Int. Cl.: G02B 13/06, G03B 17/56, G03B 37/00

(54) **Panoramic camera**

(30) Priority: 07.11.2008 GB 0820416
(71) Applicant: Otus Technologies Limited, 26 Braid Road Edinburgh EH10 6AG (GB)
(72) Inventor: Tocher, Neil, Edinburgh (GB); Ure, Cameron James, Edinburgh (GB)
(74) Representative: Hindle, Alistair Andrew

(57) **Abstract**

A panoramic camera comprising at least one reflector and an image sensor. The camera has an integral annular to rectangular image conversion module to convert annular images received on the image sensor. The camera is remotely controllable to enable a remote user to select a portion of the resulting rectangular image or change optical properties such as exposure time using a mobile telephone having a browser interface and lacking annular to rectangular image conversion software. Images or video are automatically uploadable to an internet server. Still or video image can be encrypted, along with the measured location at which the still or video images were taken. An integral stand enables the panoramic camera to better take images of rooms when resting on the floor.

## Description

### Field of the invention

The invention relates to the field of panoramic cameras.

### Summary of the invention

Panoramic cameras provide images of light received from a 360° field of view around the camera as still or video images. Panoramic cameras include both cameras with a spherical field of view and cameras with a toroidal field of view.

The invention aims to provide improved panoramic cameras. Some aspects of the invention aim to provide improved optics for panoramic cameras. Some aspects of the invention aim to provide improved data processing functionality for panoramic cameras. Some aspects of the invention aim to provide improved control functions to better enable the panoramic cameras to be used for applications such as creating interactive images and video tours, and videoconferencing. In some embodiments, the invention aims to facilitate remote use and remote control of the panoramic camera.

According to a first aspect of the present invention there is provided a panoramic camera comprising an image sensor and at least one reflector adapted to direct light received from a 360° field of view around the camera onto the image sensor.

Preferably, the panoramic camera further comprises image processing apparatus, such as one or more microprocessors executing image processing program code. Preferably, the at least one reflector is adapted to image the field of view onto an annular region of the image sensor. For example, the at least one reflector may map a 360° field of view around the camera onto an annular region of the image sensor. To this end, the at least one reflector typically comprises or consists of a convex mirror, typically having an axis orthogonal to a ground engaging base so that the axis of the said convex mirror is vertical when the panoramic camera rests with the ground engaging base in contact with a horizontal surface. Preferably, the image processing apparatus is operable to transform the image received on the annular region of the image sensor into a rectangular format.

The at least one reflector images light received from a 360° field of view around the camera onto the image sensor. In order to do this the at least one reflector typically comprises a convex axially symmetric reflector. Preferably, the field of view of the camera is not spherical. A spherical field of view would require additional optics, and increased data processing capability, which would unnecessarily increase costs in many applications. Typically, the field of view of the camera has an azimuthal extent of at least 90°. Preferably, the field of view of the camera has an azimuthal extent of 90 to 170°. Preferably, the field of view of the camera has an azimuthal extent of around 130°. For example, the camera may have an azimuthal extent extending from -55° (i.e. 55° below the horizon) to +75° (i.e. 75° above the horizon).

The panoramic camera may comprise a stand, which is typically integral to the camera, and adapted so that the panoramic camera can rest on a horizontal surface, with the at least one reflector at least 2 cm, and preferably at least 5 cm, above the horizontal surface. For example, the stand may have a ground engaging base at least 2cm, and preferably at least 5cm, below the at least one reflector when the panoramic camera rests with the ground engaging base on a horizontal surface. This enables the panoramic camera to take pictures which can provide a good view of the interior of a room when used to take photographs of the interior of buildings, for example, for use in electronic tours. (By electronic tours we include still or a video image presentation, which may be provided through a web server, which are typically interactive, enabling a user to view the interior of the building). Typically, at least some of the electronic components used to control the panoramic camera, and or to process images recorded by the image sensor, and/or communication interface electronics are located within the integral stand. Thus, a compact panoramic camera can be provided which is especially suitable for taking pictures of the interior of buildings, as it can simply be placed on the ground, rather than requiring to be fitted to a detachable tripod. The panoramic camera may also be suitable for use in videoconferencing applications, as it can be simply placed on a table, around which participants may sit.

The at least one reflector may be mounted on a deployable support. For example, the at least one reflector may be mounted on a deployable support which is operable between a stowed configuration in which the reflector is located within the body of the panoramic camera and a deployed configuration in which the reflector is spaced apart from the body of the panoramic camera. The panoramic camera may therefore comprise a ground engaging base on which the camera can be rested and the deployable support (for example an elongate rod) may be located to extend from an opposite side of the panoramic camera, when the deployable support is operated from the stowed configuration to the deployed configuration. Typically the deployable support extends vertically upwards from the body of the panoramic camera when the panoramic camera rests on the ground engaging base and the deployable support is deployed.

The image sensor may also be mounted to the deployable support and thereby move with the at least one reflector. However, in some embodiments the image sensor is mounted to the base and the at least one reflector is mounted to the deployable support so that the distance between the image sensor and the at least one reflector is greater when the deployable support is deployed. This may facilitate provision of a less distorted image by increasing the optical path length between the at least one reflector and the image sensor, while enabling the at least one reflector to be spaced apart from the ground in use.

The at least one reflector may comprise a convex lower reflector, adapted to receive light from the field of view, and to reflect that light on to an upper reflector. Preferably, the upper reflector is adapted to reflect the light received from the convex lower reflector onto the image sensor, typically through focusing optics. Typically, the focusing optics are also operable to reduce, or removed, aberrations and/or distortions resulting from reflecting a 360° field of view from a convex lower reflector. Preferably, the convex lower reflector is parabolic.

Where a convex lower reflector is provided, the image sensor may be located within the convex lower reflector. Accordingly, the convex lower reflector may comprise an aperture through which light reflected from the upper reflector can access the image sensor. Typically, the focusing optics is provided within the convex lower reflector. Electronic components used to control the panoramic camera and/or to process images recorded by the image sensor, and/or interface electronics may be located within the convex lower reflector, thereby facilitating the provision of a compact device.

The focusing optics may be aspheric. Thus, the focusing optics may consist of a plurality of lenses, each of which is aspheric. The lenses will typically be co-axial. By using aspheric lenses, instead of parabolic lenses, the optical arrangement is a less sensitive to any centering errors caused by any slight asymmetry and or radial displacement of, or between the lenses. This enables a high-quality, reliable device to be provided at a reasonable cost. If the focusing optics comprised or consisted of parabolic lenses, the optics would be more sensitive to manufacturing errors, or more readily damaged in use.

The focusing optics may comprise a plurality of aspheric lenses which are coaxial. In this case, the focusing optics preferably comprise a first lens, which is a bi-convex lens. The focusing optics may comprise a second lens, through which light passes after it has passed through the first lens, which second lens is bi-concave. The focusing optics may comprise a third lens, through which light passes after it has passed through at least the first, and preferably also the second lens, which has a deep meniscus. For example, the third lens may have convex and concave part-spherical surfaces. This third lens functions to correct aberrations. The focusing optics may comprise a fourth lens, located such that light passes through the fourth lens after it has passed through the third lens, which fourth lens is a bi-convex lens. Further lenses may be provided. Alternatively, the only focusing components may be the said four lenses.

By using aspheric focusing optics, the upper reflector may be less complex than would otherwise be the case. Accordingly, the upper reflector may be planar. A planar reflector is typically less expensive to provide than a concave or convex reflector. The panoramic camera may comprise a transparent cover which extends between the lower reflector and the upper reflector, allowing light to reach the lower reflector and holding the upper reflector in place. This transparent cover can prevent the reflectors from being marked by a user's hand, or damaged. This is especially helpful in a portable device.

However, the upper reflector may be convex. The upper reflector may be supported on a support, such as an elongate rod. The upper reflector may have an axis coaxial with the elongate rod. The support may be a deployable support, discussed above. The deployable support may be axially slidable relative to the body of the panoramic camera.

The panoramic camera may be adapted to take discrete images, and so function as a still camera. However, the panoramic camera may be adapted to take frequent images, and to thereby function as a video camera. The panoramic camera may be operable to output streaming images, in at least one operating mode. The panoramic camera may further comprise a microphone, to enable sound to be recorded.

Preferably, the panoramic camera comprises at least one, and typically a plurality of communications interfaces. For example, the panoramic camera may comprise a mobile telecommunications network transceiver, such as a GPRS or GSM transceiver. The panoramic camera may comprise one or more other wireless communications interfaces, such as a WiFi interface and/or Bluetooth interface. Thus, still or video images taken by the panoramic camera may be processed and then transmitted to a remote user using a wireless communications interface. Furthermore, the panoramic camera may receive instructions through one or more of the plurality of communications interfaces, for example, from a remote user. The panoramic camera may further comprise a wired communication port, such as an ethernet or a USB port. The panoramic camera may comprise a static memory module interface port adapted to communicate with a static memory module, such as an SD card, for example, to record images.

Preferably, the panoramic camera can receive instructions through one or more wireless communications interfaces. Thus, the panoramic camera may be controllable remotely. The panoramic camera may transmit provisional images to a remote user, and then record or transmit final images, which may have a higher resolution than the transmitted provisional images, responsive to an instruction from a remote user that the final image should be recorded and/or transmitted The panoramic camera may be adapted so that a remote user may change one or more exposure levels of an image.

The panoramic camera may be adapted to transmit images to a remote server. Typically, the panoramic camera comprises an annular image to rectangular image conversion module (for example, a module of the image processing program code executed by the one or more microprocessors) and an image transmission module operable to transmit a rectangular image, or selected portion thereof, obtained from the annular image to rectangular image conversion module.

The panoramic camera may be adapted to record images at a plurality of different exposures. For example, the panoramic camera may be adapted to record images at at least three different exposures. The image processing apparatus may be adapted to form composite images derived from at least two, and typically three of these images recorded at different exposures. Thus, the panoramic camera may have High Dynamic Range capability.

Preferably, the panoramic camera has a tone mapping module operable to tone map received images. The tone mapping module may be user actuatable, for example, by a button.

The panoramic camera may comprise an image encrypting module. For example, the program code executed by the image processing apparatus may comprise an image encrypting software module. Thus, images taken by the panoramic camera may be transmitted in encrypted format. This may, for example, allow the panoramic camera to be rented or leased to third parties who may be charged depending on the number of images which they record.

The panoramic camera may comprise a location determining device, for example, a GPS or Galileo receiver. The panoramic camera may be adapted to record the location at which an image, or stream of images, is recorded, as determined by the location determining device. Thus, the panoramic camera may comprise a location recording module. The panoramic camera may be adapted to encrypt an image, or image stream, along with the location where it is determined that that image was taken. Thus, the panoramic camera may comprise an image and image location encryption module. For example, a single encrypted file may be transmitted comprising both the images and the location data.

The server which receives the images may be adapted to determine whether the location at which some of the images were taken were clustered. Thus, the server may be operable to analyse the location at which a plurality of images are taken using a cluster detecting algorithm. The server may be adapted to determine whether some of the images were taken within a defined distance of each other, or within a zone of defined size, shape or radius. Thus, the server may be operable to analyse the absolute or relative location at which images are taken by a panoramic camera. The panoramic camera and the server may be part of a system which is adapted to charge a user of a panoramic camera dependent on the images which the user takes, or uses for a particular purpose (e.g. export, or inclusion on a web server) using the panoramic camera. The system may charge a user differently, for example less, to use a plurality of images which are taken within a defined distance of each other for the particular purpose, than the system could charge a user to use the same number of images which are taken more than a defined distance from each other for the particular purpose. For example, the system may charge a user less to use multiple images taken within the same building, as determined from location data, than the same number of images taken in different buildings. This enables electronic tours of buildings for sale or rent to be created, in which the charge rendered to, or in respect of, a particular user, depends on the number of distinct locations where images are taken, or used for the purpose of providing an electronic tour, rather than solely on the number of images which are taken, or used for the purpose of providing an electronic tour.

The invention also extends to a method comprising taking an image using a panoramic camera according to the first aspect of the invention, and uploading the image onto a web server such that it is retrievable with reference to the location where the image was taken, as measured by the location determining device within the panoramic camera.

The panoramic camera may be adapted to transmit only part of an image (typically part of a processed still or video image). Thus, the panoramic camera may comprise an image portion selection module operable to determine a portion of an image to be transmitted to a remote user responsive to selection instructions received from the remote user. This may be advantageous where the panoramic camera transmits images using a relatively low bandwidth or costly communication service. The part of the image which is transmitted may be selectable by a remote user. The panoramic camera may be adapted to transmit part or all of an image at one of a range of different resolutions and more zoom factors. The resolution and/or zoom factor may be user selectable. Thus, a remote user may select the part of an image which they wish to view, and the resolution and/or zoom factor at which they wish to view it, and the panoramic camera will transmit the selected data to them. This can enable a remote user to view parts of an image across a relatively low bandwidth communications network, or using a relatively low resolution screen, for example a screen of a mobile telephone.

The panoramic camera may comprise an object tracking module operable to track an object visible within the field of view, and to stream image data concerning part of an image, which part of an image is varied responsively to the object tracking module to track the object. The object tracking module may be operable to track more than one object within the field of view, currently. The panoramic camera, or a server which receives image data from the panoramic camera, may be operable to track a plurality of objects (e.g. people, or people's faces), and to transmit different parts of an image, each of which includes a respective tracked object, to a different image receiver. This may be useful in videoconferencing applications, as it enables different parts of the same image, each of which is centred on a different track objects (e.g. person, or persons face) to be transmitted to different participants or other viewers.

The panoramic camera may comprise a plurality of infra-red light emitting elements (e.g. infra-red emitting diodes) around a periphery of the device. For example, a plurality of infra-red light emitting elements may be provided apart around the circumference of the panoramic camera, in a horizontal plane. In this case, the image sensor should be sensitive to infra-red light.

The invention extends in a third aspect to a method remotely controlling a panoramic camera according to the first aspect of the invention, in which the at least one reflector is adapted to image the field of view onto an annular region of the image sensor, the method comprising receiving commands from a user using a user interface of a computing device (for example a keyboard, pointing device or touch screen of a mobile telephone, personal digital assistant or laptop or desktop computer), relaying received commands through the internet to the panoramic camera and, responsive to the commands, the panoramic camera converting an annular image received by the image sensor to a rectangular format image and transmitting the resulting rectangular format image, or a portion thereof, to the computer device, across the internet, for display to a user.

Preferably the portion of the rectangular format image which is transmitted is user selectable by way of the user interface of the computing device. The resolution of the annular image, or portion thereof, which is transmitted to a user may be user selectable by way of the user interface of the computing device.

The invention extends in a fourth aspect to a camera support comprising a cradle for receiving a personal electronic device having a video camera, an adaptor for attaching the cradle to a stand, a motor for rotating the cradle relative to the adaptor, an electronic interface within the cradle and positioned to connect electronically with a cooperating electronic interface of a personal electronic device having a camera and retained within the cradle, wherein the motor is operable to rotate the cradle relative to the adaptor responsive to instructions received from a retained personal electronic device through the said electronic interface. The invention also extends to a kit comprising the camera support and a computer readable medium storing computer program code which, when executed on a personal electronic device causes the personal electronic device to take a photographic image using a camera of the personal electronic device, output a signal through the cooperating electronic interface to cause the motor to rotate the cradle relative to the adaptor, and to take a further photographic image, and then to stitch the photographic images together.

The adaptor may be an integral part of the stand. Typically, the adaptor is demountably attachable to the stand. Typically, the stand is a tripod. The personal electronic device is typically a mobile telephone or personal digital assistant and the camera is typically integral to the personal electronic device. The camera is typically digital.

The invention also extends to computer program code, stored in or on a computer readable medium, which when executed on a computing device having an image sensor and at least one reflector adapted to direct light received from a 360° field of view around the camera onto the image sensor, causes the computing device to function as a panoramic camera according to the first aspect of the invention. The computer readable medium may, for example, by a RAM or ROM, EPROM or EEPROM, a solid state memory device, a magnetic or optical carrier.

Optional features of each of the five aspects of the invention correspond to optional features described in relation to any of the five aspects of the invention.

### Description of the Drawings

An example embodiment of the present invention will now be illustrated with reference to the following Figures in which:
Figure 1 is a cross-section through a first example of a panoramic camera according to the invention;
Figure 2 is a cross-section through the upper and lower reflector, and the focusing optics and image sensor of the panoramic camera of Figure 1;
Figure 3 is a magnified cross-section of the focusing optics and image sensor of Figure 2;
Figure 4 is a cross-section through a second example of a panoramic camera according to the invention with the deployable support in the stowed configuration; and
Figure 5 is a cross-section through the upper part of the panoramic camera of Figure 4 with the deployable support in the deployed configuration; and
Figure 6 is a schematic diagram through a mobile telephone cradle.

### Detailed Description of an Example Embodiment

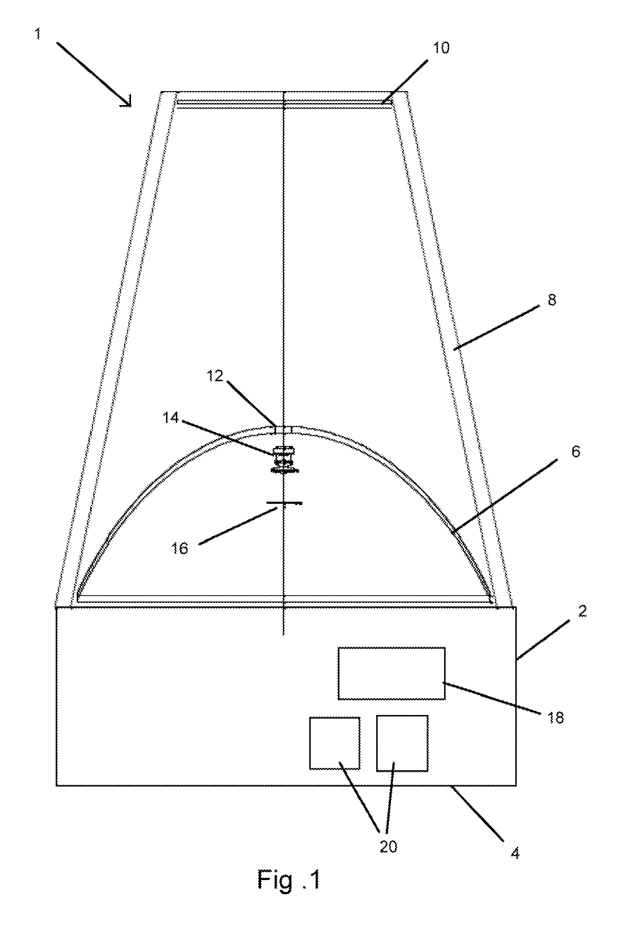

With reference to Figure 1, a panoramic camera, shown generally as 1, comprises a stand 2 having a flat base 4. The stand supports a convex, parabolic lower reflector 6. A transparent cover 8 extends upwards from the stand and supports a downward-facing planar upper reflector 10. The parabolic lower reflector has a central aperture 12, and is arranged so that light from a 360° field of view around the panoramic camera is reflected from the parabolic lower reflector onto the planar upper reflector, and through the central aperture and focusing optics, shown generally as 14, onto a CMOS or CCD camera element 16, functioning as an image sensor. The image sensor is in electronic communication with an image processing module 18 comprising at least one and preferably two microprocessors and memory. The processing module is also in electronic communication with one or more communications interfaces 20, at least some of which are wireless communications interfaces such as WiFi, Bluetooth, or cellular telephone interfaces, to facilitate remote control of the panoramic camera, and to enable images to be transmitted from the panoramic camera to a remote server.

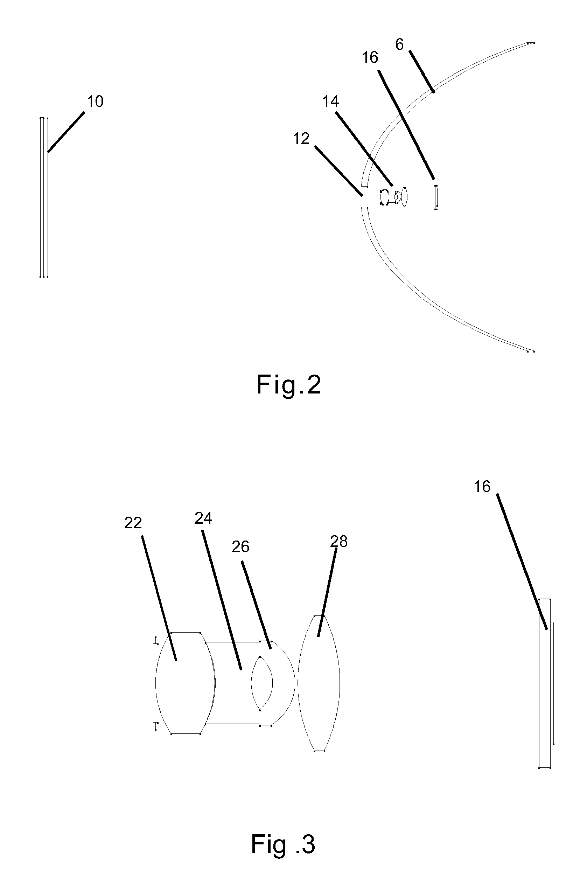

With reference to Figures 2 and 3, the focusing optics comprise a bi-convex lens 22, which functions as a condenser, a bi-concave lens 24, a deep meniscus lens 26, having a part-spherical concave curved surface and a part-spherical convex curved surface, each of which has a relatively small radius of curvature (e.g. 1.2 mm radius of curvature for the upper concave surface, and 1.7 mm radius of curvature for the lower convex curved surface). The focusing optics also include a bi-convex fourth lens 28. Each of the lenses is co-axial. Indeed, each of the lenses, as well as the upper and lower reflectors, are co-axial, and axially symmetric.

The image sensor is co-axial with the lenses but has a rectangular (i.e. square or oblong) image sensitive region. However, due to the configuration of the reflector, the field of view of the reflector is mapped onto an annular part of the image sensor. The image processing module is operable to transform the annular image into an image in a rectangular format using algorithms known to those skilled in the art. By carrying out the transformation from annular image into a rectangular image within the panoramic camera, images currently or previously viewed using the panoramic camera can be readily viewed from remote devices without the remote devices requiring the software required to transform an annular image into a rectangular image. Parts of the rectangular image selected by a remote user can be transmitted to the remote user. This facilitates viewing of images and remote use of the panoramic camera using terminal devices which do not have annular image to rectangular image conversion software, such as mobile telephones, personal digital assistants and other computers executing web browsers. The panoramic camera may comprise an internet interface, such as an HTTP server, for transmitting rectangular images, and parts of rectangular images interactively selected by remote users across an internet connection, obtained by the transformation of an annular image into a rectangular image by the image processing apparatus.

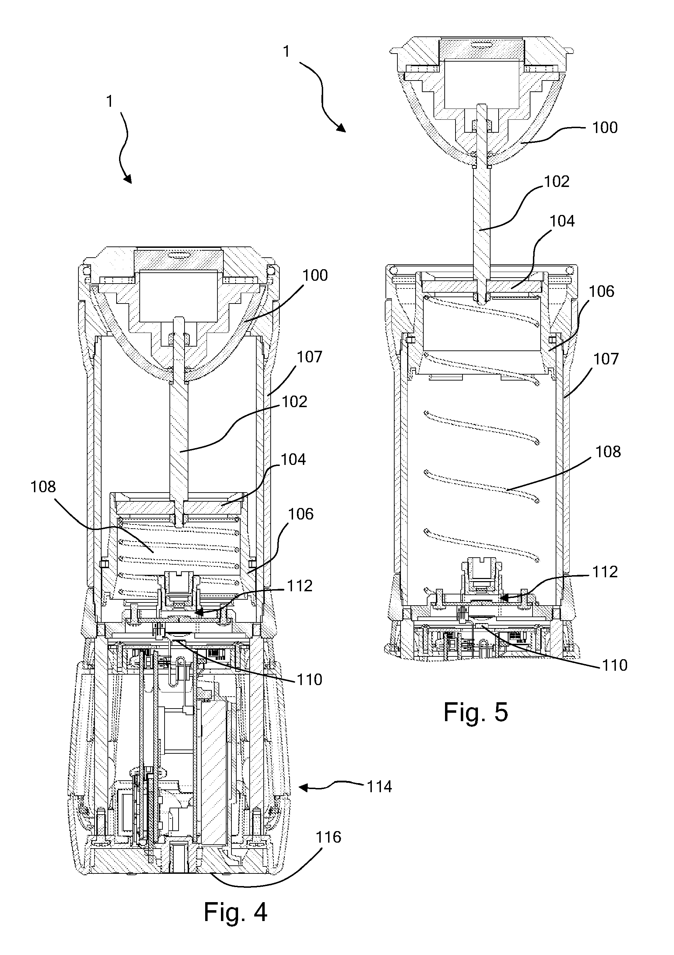

In a second example embodiment, illustrated in Figure 4 and Figure 5, the panoramic camera comprises a single concave mirror 100, fixed to a rod 102 which extends between the concave mirror and a disc 104 mounted to a piston 106 which is axially slidably mounted within the camera body 107, and which is biased to the extended position shown in Figure 5 by a spring 108. A camera 110, and focusing optics 112 are arranged to receive light from around the panoramic camera when the rod is extended to the position illustrated in Figure 5. The camera also includes a base portion 114 having a ground engaging base 116 and including electronic components required to process received images, including to convert annular images to rectangular images, and mutations adapters, including a USB port and a wireless electronic interface.

For storage, the concave mirror can be stored within the panoramic camera by pressing down on the concave mirror so that the piston slides within the body of the panoramic camera, compressing spring 108. The mirror remains in the stowed position, held by a catch, until the catch is later released by a user, whereupon the piston slides, biased by the spring, until the concave mirror is returned to the deployed position shown in Figure 5.

Thus, the mirror can be stored within the body of the panoramic camera, where it is protected from dust and finger marks when the panoramic camera is moved from one location to another.

In one example application, the panoramic camera can be used to take still images suitable for use in creating electronic tours of properties for sale or lease. A first operative carries the panoramic camera between rooms of a building, and deposits the camera where they believe that a picture should be taken. A remote user uses the wireless communications interfaces to view images generated by the panoramic camera, to determine whether the images are suitable. They can vary light exposure levels and, when they are happy with the image, they can indicate that a high-resolution image should be stored, or transmitted to a remote server for use in creating an electronic tour. In this application, it may be that the images are encrypted, along with the location where the image was taken, derived from a GPS or Galileo receiver, and decryption of the images is controlled, so that an appropriate charge may be made for the use of the images. A relatively low resolution images may be transmitted to the remote user on a continuous basis while they are determining the suitability of the images generated by the panoramic camera. High-resolution images may then be recorded, or transmitted, responsive to an instruction by the remote user that a picture should be taken. Thus, it is not necessary for images at the highest resolution which the panoramic camera can take to be transmitted to the remote user on a continuous basis, whilst they are determining whether they are happy with the images. A single user may both move the panoramic camera between locations and cause the images to be recorded/transmitted. As the panoramic camera includes wireless communications interfaces, they may stand out of site when an image is recorded and/or transmitted so that they do not appear in the image.

The remote user may employ a device such as a mobile telephone or personal digital assistant to view images from the panoramic camera, and to select images from amongst the field of view. Because the panoramic camera includes a process which can carry out annular to rectangular format image conversion within the panoramic camera, there is no need for the electronic device used by the remote user to communicate, through the internet, with the panoramic camera to have software to carry out annular to rectangular format image conversion, or even for it to be necessary for it to have the processing power which would be required to convert annular format images to rectangular format images in real time, or near real-time. Thus, the remote user may interact remotely with the panoramic camera using a web browser interface of their mobile telephone, or personal digital assistant, without having to download a complex application. Selected images may be transmitted from a mobile telephone or personal digital assistant to a remote web server to provide electronic tours.

In another example application, the panoramic camera is used to record images during a video-conference. The panoramic camera is located on a horizontal surface, such as a table, with various participants stationed around the panoramic camera.

Video images are captured by the panoramic camera at a high-resolution. Remote users communicate with the panoramic camera over a communications network, such as the internet, using the wireless communications interfaces of the panoramic camera. Remote users can select a part of the high-resolution image which is being captured by the panoramic camera to be transmitted to them. For example, the panoramic camera may take high resolution images of a large field of view and they will typically only want to see part of the video images which include some or of the participants in the video-conference. Furthermore, there may be constraints on the bandwidth at which video images can be streamed to them from the panoramic camera. Thus, only a selected part of the high-resolution image is transmitted to each remote user. A remote user may be able to select an object (typically a participant's head) to track. The computer within the panoramic camera then tracks that object within the processed video images, and transmits a portion of the processed video images, including the tracked object, to the respective remote user. Thus several remote users make each follow different objects, such as other participants.

In other embodiments all, or the majority, of the images obtained by the panoramic camera are transmitted, typically after processing including transformation from an annular format to a rectangular format, to a remote server. The remote server is then operable to transmit one or more selected portions of the received images, or images derived therefrom after further image processing, which may be different in each case, to one or more remote users. The said portions of the received images and/or the resolutions or zoom factors of the images transmitted to remote users may be selectable by the user, or by the server. To this end, the server may comprise an object tracking module.

In alternative embodiments, a concave reflective mirror supported by stand, or a fisheye lens, may be mounted on a mobile telephone or personal digital assistant, over a digital camera which is integral to the mobile telephone or personal digital assistant. For example, the concave reflective mirror stand, or the fisheye lens, may include a permanent magnet for demountable coupling to a magnetisable metal region surrounding the integral camera of a mobile telephone or personal digital assistant. Computer software may then be executed on the mobile telephone or personal digital assistant which includes annular format to rectangular format image conversion software, thereby enabling the mobile telephone or personal digital assistant to function as the panoramic camera, for taking still images, or video images. The mobile telephone or personal digital assistant may comprise software to stitch multiple non-spherical images together to provide a spherical image, a selectable portion of which may be viewed at any time. The computer software executed on the mobile telephone or personal digital assistant may be operable to transmit selected images, or video, to a remote server, across the internet, and a server may be provided to receive these images and make them available for interactive viewing across the internet, for example to provide interactive tours of buildings.

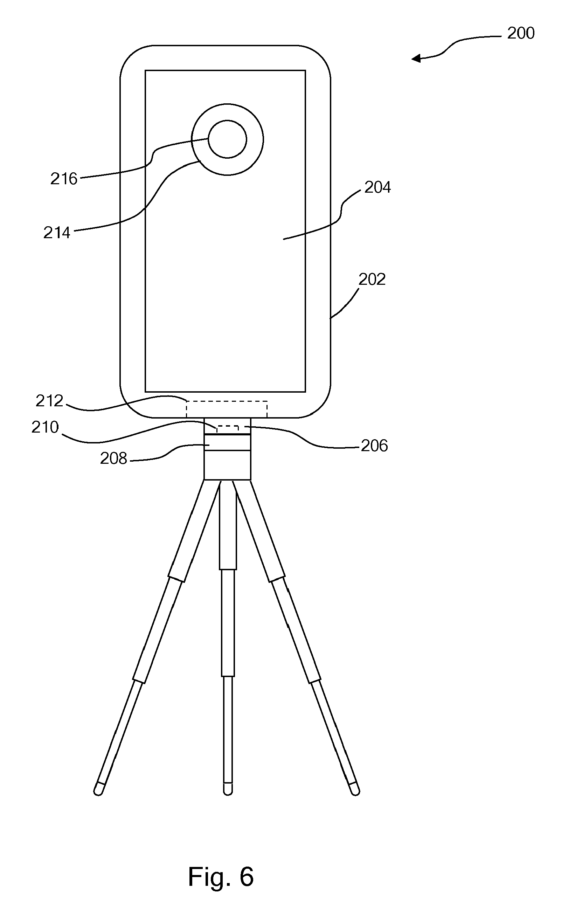

In a further alternative embodiment illustrated in Figure 6, a panoramic camera 200 is formed in use from a cradle 202 for retaining a mobile telephone 204 having an integral camera. The cradle has an adapter 206 for attachment to a camera fitting 208 of a tripod by way of an externally threaded screw 210 of the tripod which fits into a corresponding internally threaded recess of the cradle. The cradle includes a motor 212 operable to rotate the cradle relative to the adapter. In use, a mobile telephone is inserted into the cradle. An electronic interface (not shown) within the cradle fits into a cooperating electronic interface of the mobile telephone (now shown), for example, an external audio jack socket or a USB interface. A fisheye lens 214 is fitted over the camera lens 216 of the mobile telephone, for example by way of a magnetic attachment which demountably attached to a magnetisable metal region of the camera around the camera lens. The tripod is rested on a surface, such as a horizontal floor within a room of a building. The mobile telephone executed a computer software application which instructs the camera within the mobile telephone to take an image, through the fisheye lens and then instructs the motor within the cradle to rotate the cradle by a defined amount relative to the tripod, for example 90° or 120°. A further picture is taken, under the control of the computer software application and the motor is instructed to again rotate the cradle relative to the adapter by a defined amount (usually the same amount). Accordingly, pictures are taken through the fisheye lens at various orientations, including images around a full 360° field of view. The computer software application also includes an image stitching module which uses stitching algorithms familiar to one skilled in the art to assemble a 360° panoramic image (typically, but not essentially in a rectangular format) from the image. By including more than two images having an angular width of approaching 180°, consecutive images will overlap, allowing better image stitching. The images may or may not have an azimuthal extent of 180°. will typically have an azimuthal extent of at least 120°, or at least 150°. The mobile telephone can be instructed to take images around a full 360° field of view remotely so that an operative placing the device can remotely instruct the device so as to not appear in the images. The computer software application may automatically upload the resulting images (typically after stitching) to a remote internet server to provide interactive online electronic images or tours, for example of the interior of a building. This may occur without the user needing to input further authentication data as the computer software application may identify the user to the remote internet server.

Further variations and modifications may be made within the scope of the invention herein disclosed.

## Claims

1. A panoramic camera comprising an image sensor and at least one reflector adapted to direct light received from a 360° field of view around the camera onto the image sensor.

2. A panoramic camera according to claim 1, wherein the at least one reflector is adapted to image the field of view of the panoramic camera onto an annular region of the image sensor.

3. A panoramic camera according to claim 2, wherein the panoramic camera further comprises image processing apparatus operable to transform the image received on the annular region of the image sensor into a rectangular format.

4. A panoramic camera according to any one preceding claim, comprising a stand adapted so that the panoramic camera can rest on a horizontal surface, with the at least one reflector at least 2 cm above the horizontal surface.

5. A panoramic camera according to claim 4, wherein at least some of the electronic components used to control the panoramic camera, and or to process images recorded by the image sensor, and/or communication interface electronics are located within the integral stand.

6. A panoramic camera according to any one preceding claim, wherein the at least one reflector is mounted on a deployable support.

7. A panoramic camera according to claim 6, wherein the image sensor is mounted to the base and the at least one reflector is mounted to the deployable support so that the distance between the image sensor and the at least one reflector is greater when the deployable support is deployed.

8. A panoramic camera according to any one preceding claim, wherein the at least one reflector comprises a convex lower reflector, adapted to receive light from the field of view, and to reflect that light on to an upper reflector, wherein the upper reflector is adapted to reflect the light received from the convex lower reflector onto the image sensor, through focusing optics.

9. A panoramic camera according to any one preceding claim, wherein the focusing optics comprise a plurality of aspheric lenses which are coaxial.

10. A panoramic camera according to any one preceding claim, wherein the panoramic camera comprises one or more wireless communications interface and is operable to receive instructions through the one or more wireless communications interfaces and is thereby controllable remotely.

11. A panoramic camera according to claim 10, wherein the panoramic camera is operable to transmit provisional images to a remote user, and then record or transmit final images, which may have a higher resolution than the transmitted provisional images, responsive to an instruction from a remote user that the final image should be recorded and/or transmitted.

12. A panoramic camera according to any one preceding claim, wherein the panoramic camera comprises an image portion selection module operable to determine a portion of an image to be transmitted to a remote user responsive to selection instructions received from the remote user.

13. A panoramic camera according to any one preceding claim, wherein the panoramic camera comprises a location determining device and an image encrypting module and wherein the panoramic camera is operable to transmit images, along with the location wherein it is determined that the image was taken, in encrypted format.

14. A server operable to receive encrypted images from a panoramic camera according to claim 13, and operable to analyse the location at which a plurality of images are taken using a cluster detecting algorithm or operable to analyse the absolute or relative location at which images are taken by a panoramic camera.

15. A method of remotely controlling a panoramic camera according to any one preceding claim, in which the at least one reflector is adapted to image the field of view onto an annular region of the image sensor, the method comprising receiving commands from a user using a user interface of a computing device, relaying received commands through the internet to the panoramic camera and, responsive to the commands, the panoramic camera converting an annular image received by the image sensor to a rectangular format image and transmitting the resulting rectangular format image, or a portion thereof, to the computer device, across the internet, for display to a user.
